# EUROPÄISCHE PATENTSCHRIFT

(11) **EP 0 898 806 B1**
(45) Veröffentlichungstag und Bekanntmachung des Hinweises auf die Patenterteilung: **27.10.1999**
(21) Anmeldenummer: 97923815.1
(22) Anmeldetag: 14.05.1997
(51) Int. Cl.: H02K 3/34, H02K 3/40

(54) **TRÄGERKÖRPER FÜR EINE ELEKTRISCHE WICKLUNG UND VERFAHREN ZUR HERSTELLUNG EINES GLIMMSCHUTZES**
SUBSTRATE FOR AN ELECTRICAL WINDING AND PROCESS FOR PRODUCING CORONA SHIELDING
CORPS SUPPORT POUR BOBINAGE ELECTRIQUE ET PROCEDE DE FABRICATION D'UN DISPOSITIF ANTI-EFFLUVES

(30) Priorität: 15.05.1996 DE 19619724
(43) Veröffentlichungstag der Anmeldung: 03.03.1999
(73) Patentinhaber: SIEMENS AKTIENGESELLSCHAFT, 80333 München (DE)
(72) Erfinder: SCHULTEN, Michael, D-44879 Bochum (DE); THIEMANN, Ingo, D-46238 Bottrop (DE)
(86) Internationale Anmeldenummer: DE9700973
(87) Internationale Veröffentlichungsnummer: WO9743818

(56) Entgegenhaltungen:
- DE-A- 3 636 008
- GB-A- 714 311
- US-A- 3 990 029
- US-A- 4 001 616
- PATENT ABSTRACTS OF JAPAN vol. 008, no. 239 (E-276), 2.November 1984 & JP 59 117435 A (FUJI DENKI SOUGOU KENKYUSHO:KK), 6.Juli 1984,
- PATENT ABSTRACTS OF JAPAN vol. 008, no. 243 (E-277), 8.November 1984 & JP 59 122332 A (TOSHIBA KK), 14.Juli 1984,
- PATENT ABSTRACTS OF JAPAN vol. 006, no. 032 (E-096), 26.Februar 1982 & JP 56 150939 A (TOSHIBA CORP), 21.November 1981,

## Beschreibung

Die Erfindung betrifft einen Trägerkörper für eine elektrische Wicklung sowie ein Verfahren zur Herstellung eines Glimmschutzes für eine elektrische Wicklung.

Die DE-A-3 636 008 offenbart einen Trägerkörper für eine elektrische Wicklung entsprechend dem Oberbegriff des Anspruchs 1.

Aus der EP 0 481 984 B1 geht eine Leiterwicklungsanordnung für eine elektrische Großmaschine, insbesondere für einen Turbogenerator, hervor. Die Leiterwicklungsanordnung ist so aufgebaut, daß in einem Trägerkörper Nuten vorgesehen sind, in denen jeweils elektrische Leiter angeordnet sind. Die elektrischen Leiter sind jeweils isoliert und mit geeigneten Mitteln in der Nut befestigt. Die Leiterwicklungsanordnung wird in einem Ganztränkverfahren von einem aushärtbaren Füllstoff, wie z.B. einem Kunstharz, umgeben. Der zunächst flüssige Füllstoff wird bei einer Temperatur zwischen etwa 100 und 200 °C ausgehärtet. Nach erfolgter Aushärtung kühlt die nun zu einem kompakten Festkörper zusammengefaßte Leiterwicklungsanordnung auf Raumtemperatur ab. Dabei kommt es zu thermisch bedingten Schrumpfungen. Diese führen zu Zugspannungen innerhalb der Anordnung. Damit kann es zu einer Bildung von Rissen kommen. An solchen Rissen können Glimmentladungen auftreten, die insbesondere im Laufe der Zeit auch zu einer Schädigung der Leiterisolierung führen können. Gemäß der EP 0 481 984 B1 soll eine solche Rißbildung kontrolliert in einem Bereich konzentriert werden, in welchem lediglich unschädlich niedrige elektrische Feldstärken auftreten sollen. Dazu wird auf die Isolierung des elektrischen Leiters ein halbleitendes Band gewickelt, welches eine erste Halbleiterlage bildet. Über diese erste Halbleiterlage wird eine zweite Halbleiterlage gewickelt, die mit der ersten Halbleiterlage elektrisch verbunden ist. Zwischen den beiden Halbleiterlagen ist eine für den Füllstoff durchlässige Trennschicht angeordnet. Diese Trennschicht, die vorzugsweise ein Spaltglimmerband enthält, stellt eine Sollbruchstelle dar, so daß thermisch bedingte Spannungen zu einer Rißbildung im wesentlichen nur an der Trennschicht führen. Es ergibt sich also eine konzentrierte, kontrollierte Rißbildung im Bereich der Trennschicht. Die Trennschicht liegt in einem Bereich niedriger oder verschwindender elektrischer Feldstärke, da sie zwischen den beiden, miteinander elektrisch verbundenen, Halbleiterlagen angeordnet ist. Die beiden Halbleiterlagen sind auf nahezu gleichem Potential, wodurch der Bereich zwischen den beiden Halbleiterlagen nahezu potentialfrei und damit nahezu feldfrei wird. Es kommt somit an den im Bereich der Trennschicht konzentrierten Rissen nicht zu schädlichen Glimmentladungen.

In der DE 42 19 064 A1 ist eine Glimmschutzanordnung für eine Statorwicklung einer elektrischen Maschine beschrieben. In der dargestellten Statorwicklung wird ein mit einer Hauptisolierung umgebener elektrischer Leiter in einer Nut eines Blechpaketes angeordnet. Die Nut weist eine Nutwand auf. Die Hauptisolierung ist von einem ersten Glimmschutzbelag aus einem halbleitenden Material umgeben. Auf diesen ersten Glimmschutzbelag ist ein zweiter Glimmschutzbelag aufgebracht. Der zweite Glimmschutzbelag liegt an der Nutwand an. Er ist derart behandelt, daß er ein Imprägnierharz, in dem die Statorwicklung ganzgetränkt wird, abweist. Damit verklebt der zweite Glimmschutzbelag weder mit dem ersten Glimmschutzbelag noch mit der Nutwand. Thermisch bedingte Ausdehnungen zwischen elektrischem Leiter und Blechpaket sind damit weitgehend ohne mechanische Spannungen möglich. Somit werden Rißbildungen, an denen Glimmentladungen auftreten können, weitgehend unterbunden.

Aufgabe der Erfindung ist es, einen Trägerkörper für eine elektrische Wicklung anzugeben. Weitere Aufgabe der Erfindung ist es, ein Verfahren zur Herstellung eines Glimmschutzes für eine elektrische Wicklung anzugeben.

Erfindungsgemäß wird die auf einen Trägerkörper gerichtete Aufgabe gelöst durch einen Trägerkörper der eine Trägerfläche aufweist, an der ein elektrischer Leiter einer elektrischen Wicklung anfügbar ist, welche elektrische Wicklung von einem Imprägnierstoff umgebbar ist, wobei die Trägerfläche zumindest teilweise mit einer Beschichtung für einen Glimmschutz versehen ist.

Ein solcher Trägerkörper gestattet es in einfacher Weise eine elektrische Wicklung so aufzubauen, daß sich ein wirksamer Glimmschutz ergibt. Der besondere Vorteil einer Beschichtung der Trägerfläche des Trägerkörpers liegt darin, daß die Fertigstellung des elektrischen Leiters für einen An- oder Einbau an bzw. in den Trägerkörper erheblich vereinfacht wird. Es ist nunmehr in der Regel nur noch erforderlich, den elektrischen Leiter zu isolieren und die Isolierung mit einer einzigen Glimmschutzlage, z.B. einem halbleitenden Band, zu versehen. Zusätzliche Maßnahmen zur Rißbildungsvermeidung oder für eine kontrollierte Rißbildung für die Fertigstellung des elektrischen Leiters erübrigen sich. Dies bedeutet eine deutliche Zeit- und Kostenersparnis.

Vorzugsweise ist die Beschichtung so beschaffen, daß ein allenfalls geringfügiges Aneinanderhaften von der Beschichtung und dem Imprägnierstoff erreichbar ist. Dadurch wird die Bildung von Rissen verringert, die sich durch mechanische Spannungen ergeben können. Solche mechanischen Spannungen werden insbesondere durch unterschiedliche thermische Ausdehnungen von elektrischem Leiter und Trägerkörper hervorgerufen. Ein verbesserter Glimmschutz wird dadurch erreicht, daß sich zwischen dem Trägerkörper und dem elektrischen Leiter bei einer Tränkung mit dem Imprägnierstoff durch die Beschichtung eine nur geringfügige Haftung ergibt. Mechanische Spannungen, die durch eine unterschiedliche thermische Ausdehnung von Trägerkörper und elektrischem Leiter durch eine feste Verklebung zwischen Trägerkörper und elektrischem Leiter hervorgerufen werden könnten, werden so unterbunden. Damit bilden sich keine oder nur wenige Risse, über denen es zu einer Glimmentladung kommen könnte.

Vorzugsweise ist die Beschichtung elektrisch schwach leitend. Dies unterstützt einen Glimmschutz dadurch, daß lokale Ladungsanhäufungen und damit lokale, hohe elektrische Felder nicht auftreten. Die nur schwache Leitfähigkeit stellt sicher, daß keine nennenswert hohen Wirbelströme induziert werden.

Vorzugsweise ist die Beschichtung elastisch so deformierbar, daß ein, insbesondere durch unterschiedliche thermische Ausdehnung des elektrischen Leiters und des Trägerkörpers, hervorrufbarer Zwischenraum zwischen Trägerfläche und elektrischem Leiter durch die Beschichtung ausfüllbar ist. Durch die elastische Deformation ist sichergestellt, daß sich bei einer thermisch bedingten Schrumpfung des elektrischen Leiters und/oder des Trägerkörpers kein Spalt bildet, über den es zu einer Glimmentladung kommen könnte. Durch die elastisch deformierbare Beschichtung wird eine Schrumpfung dadurch kompensiert, daß die Beschichtung ihre Dicke vergrößert, so daß sich kein Spalt bildet.

Bevorzugtermaßen enthält die Beschichtung Silikon. Weiter bevorzugt ist die Beschichtung ein Silikonkautschuk oder ein Silikonlack, insbesondere ein bei Raumtemperatur vernetzender Silikonkautschuk bzw. Silikonlack. Silikonlack bzw. Silikonkautschuk ist ein besonders geeigneter Werkstoff für die Beschichtung. Die Beschichtung kann aber auch weitere Stoffe, vorzugsweise einen eine Halbleitfähigkeit bewirkenden Zusatz, enthalten.

Bevorzugt ist die Beschichtung zwischen 10 µm und 1 mm dick.

Vorzugsweise ist der Trägerkörper als Blechpaket für eine Statorwicklung eines Generators ausgeführt, insbesondere für einen Turbogenerator mit einer Leistung größer als 10 MVA.

Weiter bevorzugt ist der Trägerkörper in einem Turbogenerator eingebaut, insbesondere in einem Turbogenerator mit einer Leistung größer als 10 MVA, wobei der Turbogenerator eine Statorwicklung mit einem Statorstromleiter aufweist und wobei die elektrische Wicklung die Statorwicklung und der elektrische Leiter der Statorstromleiter ist.

Bevorzugtermaßen weist der Trägerkörper eine Oberfläche auf, in welcher eine Nut mit einer Nutwand vorgesehen ist, wobei die Trägerfläche durch die Nutwand gebildet wird. Weiter bevorzugt weist der Trägerkörper einen Deckstreifen auf, durch welchen die Nut verschließbar ist, wobei dieser Deckstreifen eine zur Nut gerichtete Innenseite aufweist, welche mit der Beschichtung zumindest teilweise versehen ist. In der Regel wird ein elektrischer Leiter in die Nut des Trägerkörpers eingelegt und durch den Deckstreifen gesichert, welcher eine Verschiebung des Leiters in radialer Richtung unterbindet. Mechanische Spannungen, die durch eine thermisch bedingte Verschiebung zwischen elektrischem Leiter und Deckstreifen hervorrufbar sind, können dadurch unterbunden werden, daß die Innenseite des Deckstreifens mit der Beschichtung versehen ist.

Bevorzugt weist der Trägerkörper einen Zwischenschieber mit einer Zwischenschieberoberfläche auf, durch den die Nut in ihrer Höhe in zwei Teile geteilt ist, wobei die Zwischenschieberoberfläche mit der Beschichtung zumindest teilweise versehen ist. Bei einem Turbogenerator kann vorgesehen sein, daß zwei elektrische Leiter in einer Nut übereinander angeordnet werden. Dabei wird zunächst der untere Leiter eingebaut und gegen eine radiale Verschiebung durch den Zwischenschieber gesichert. Über den Zwischenschieber wird der zweite elektrische Leiter eingebaut. Mechanische Spannungen, die durch eine thermisch bedingte Verschiebung zwischen elektrischem Leiter und Zwischenschieber hervorrufbar sind, können dadurch unterbunden werden, daß die Zwischenschieberoberfläche oder ein Teil der Zwischenschieberoberfläche mit der Beschichtung versehen ist.

Erfindungsgemäß wird die auf ein Verfahren zur Herstellung eines Glimmschutzes für eine elektrische Wicklung, welche einen Trägerkörper mit einer Trägerfläche umfaßt, gerichtete Aufgabe dadurch gelöst, daß an der Trägerfläche ein elektrischer Leiter angeordnet wird, wobei der elektrische Leiter und der Trägerkörper mit einem Imprägnierstoff, insbesondere einem Kunstharz, zumindest teilweise umgeben werden und wobei die Trägerfläche in einem Beschichtungsbereich mit einer Beschichtung versehen wird, die allenfalls geringfügig an dem Imprägnierstoff haftet.

Die Vorteile eines so hergestellten Glimmschutzes ergeben sich entsprechend obigen Ausführungen.

Bevorzugt wird die Beschichtung elektrisch schwach leitend ausgeführt. Weiter bevorzugt wird die Beschichtung als Silikonkautschuk oder als Silikonlack, insbesondere als ein bei Raumtemperatur vernetzender Silikonkautschuk bzw. Silikonlack, ausgeführt.

Anhand der Zeichnung werden Ausführungsbeispiele der Erfindung näher erläutert. Es zeigen:
- FIG 1: einen Trägerkörper,
- FIG 2: einen Ausschnitt aus dem Trägerkörper aus Figur 1,
- FIG 3: die Nut eines Trägerkörpers mit eingebauten elektrischen Leitern,
- FIG 4: einen Ausschnitt eines Querschnitts eines an eine Nutwand grenzenden elektrischen Leiters, und
- FIG 5: wie Figur 4, aber nach thermischer Schrumpfung.

Gleiche Bezugszeichen haben in sämtlichen Figuren die gleiche Bedeutung.

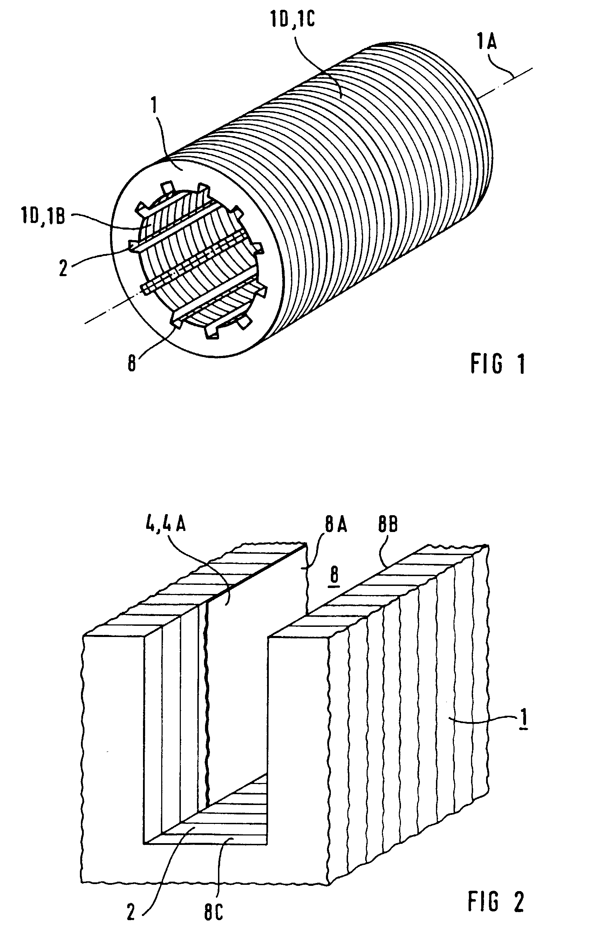

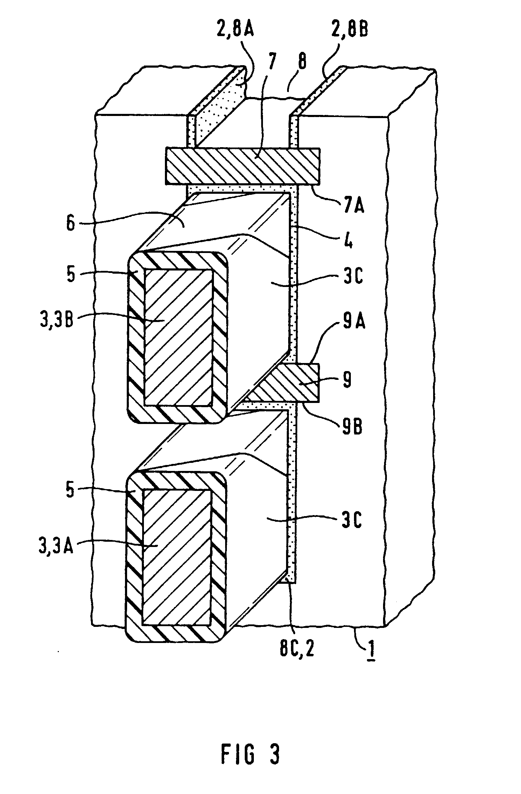

In Figur 1 ist schematisch ein als Blechpaket 1 für eine Statorwicklung eines Turbogenerators ausgeführter Trägerkörper 1 gezeigt. Er stellt einen, entlang einer Achse 1A gerichteten Hohlzylinder dar und weist eine Innenseite 1B und eine Außenseite 1C auf. Innenseite 1B und Außenseite 1C sind Teil einer Trägerkörperoberfläche 1D. Auf der Innenseite 1B erstrecken sich entlang der Achse 1A über die ganze Länge des Trägerkörpers 1 mehrere zueinander gleich beabstandete Nuten 8 mit einem jeweiligen rechteckigen Querschnitt. Bei der Verwendung eines solchen Trägerkörpers 1 in einem nicht dargestellten Turbogenerator wird in jede Nut 8 ein elektrischer Leiter 3 (siehe Figur 3) bzw. übereinander zwei elektrische Leiter 3A, 3B eingelegt. Die elektrischen Leiter 3 werden miteinander zu einer nicht dargestellten elektrischen Wicklung verbunden. Weitere Einzelheiten werden anhand von Figur 3 erläutert. Die fertiggestellte, nicht dargestellte elektrische Wicklung wird mitsamt dem Trägerkörper 1 in einem Ganztränkverfahren mit einem Imprägnierstoff umgeben. Der Imprägnierstoff wird ausgehärtet. Nach der Aushärtung des Imprägnierstoffes ergibt sich ein kompakter, zusammenhängender Festkörper.

Figur 2 zeigt in einem Ausschnitt des Trägerkörpers 1 aus Figur 1 eine Nut 8. Sie weist Nutwände 8A, 8B und 8C auf. Diese Nutwände 8A, 8B, 8C sind Teil der Trägerfläche 2. Auf der Nutwand 8A ist eine Beschichtung 4 aufgebracht. Diese Beschichtung 4 ist elektrisch schwach leitend und in einer Richtung normal zur Fläche 8A elastisch deformierbar.

Figur 3 zeigt einen der Figur 2 entsprechenden Ausschnitt mit zwei in der Nut 8 übereinander angeordneten elektrischen Leitern 3A, 3B. Jeder elektrische Leiter 3A, 3B ist von einer jeweiligen Isolierung 5 umgeben. Auf jede Isolierung 5 ist ein schwach leitendes Glimmschutzband 6 aufgewickelt. Der untere Leiter 3A wird gegen eine radiale Verschiebung nach oben durch einen Zwischenschieber 9 mit einer Zwischenschieberoberfläche 9A, 9B gesichert. An den Zwischenschieber 9 schließt sich der obere Leiter 3B an. Dieser wird wiederum gegen eine radiale Verschiebung nach oben gesichert durch einen Deckstreifen 7 mit einer Innenseite 7A. Die Trägerfläche 2 wird in dieser Ausführungsform gebildet durch die Innenseite 7a des Deckstreifens 7, der Zwischenschieberoberfläche 9A, 9B des Zwischenschiebers 9 und durch die Nutwände 8A, 8B und 8C. In diesem Beispiel sind alle diese Flächen mit einer Beschichtung 4 versehen. Es können aber auch nur einige dieser Flächen oder Teile dieser Flächen mit der Beschichtung 4 versehen sein, während die anderen Flächen oder die anderen Teile dieser Flächen unbeschichtet bleiben. Bei einer Ganztränkung einer so hergestellten elektrischen Wicklung haftet der Imprägnierstoff allenfalls geringfügig an der Beschichtung 4. Damit kommt es nicht zu einer Rißbildung durch mechanische Spannungen, die durch thermisch bedingte unterschiedliche Ausdehnungen des elektrischen Leiters 3 einerseits und des Trägerkörpers 1 andererseits hervorrufbar sind. Somit wird ein wirksamer Glimmschutz bereitgestellt, da es nicht zu Glimmentladungen über Rissen kommt.

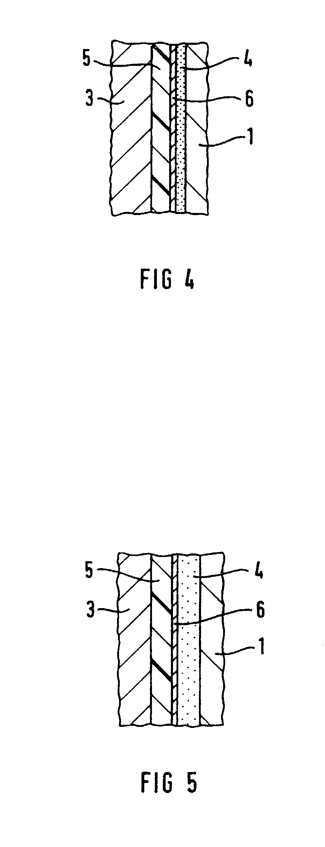

Figur 4 zeigt den Berührungsbereich zwischen elektrischem Leiter 3 und Trägerkörper 1 in einem Ausschnitt eines Querschnitts senkrecht zum elektrischen Leiter 3. In einem erwärmten Zustand, insbesondere bei einer Aushärtung des Imprägnierstoffs, wird die Beschichtung 4 zwischen dem Außenglimmschutz 6 des mit der Isolierung 5 umgebenen elektrischen Leiters 3 und der Nutwand 8b der Nut 8 im Trägerkörper 1 zusammengedrückt. Nach erfolgter Aushärtung des Imprägnierstoffs kommt es zu einer Abkühlung und damit zu einer thermisch bedingten Schrumpfung sowohl des elektrischen Leiters 3, als auch des Trägerkörpers 1. Dieser Zustand ist in Figur 5 dargestellt. Es ergibt sich ein größerer Abstand zwischen dem elektrischen Leiter 3 und dem Trägerkörper 1 im Vergleich zum erwärmten Zustand in Figur 4. Ein solcher größerer Abstand führt zu einem vergrößerten Zwischenraum zwischen dem elektrischen Leiter 3 und dem Trägerkörper 1, welcher durch die Beschichtung 4 ausgefüllt wird, da diese elastisch deformierbar ist. Dies ist an der vergrößerten Dicke der Beschichtung 4 im Vergleich zu Figur 4 erkennbar. Damit ergibt sich kein Spalt zwischen elektrischem Leiter 3 und Trägerkörper 1, über dem es zu Glimmentladungen kommen könnte.

## Patentansprüche

1. Trägerkörper (1) der eine Trägerfläche (2) aufweist, an der ein elektrischer Leiter (3) einer elektrischen Wicklung (3C) anfügbar ist, welche elektrische Wicklung (3C) von einem Imprägnierstoff umgebbar ist,
**dadurch gekennzeichnet**, daß die Trägerfläche (2) zumindest teilweise mit einer Beschichtung (4) für einen Glimmschutz versehen ist.

2. Trägerkörper (1) nach Anspruch 1,
**dadurch gekennzeichnet**, daß die Beschichtung (4) so beschaffen ist, daß ein allenfalls geringfügiges Aneinanderhaften von der Beschichtung (4) und dem Imprägnierstoff erreichbar ist.

3. Trägerkörper (1) nach Anspruch 1,
**dadurch gekennzeichnet**, daß die Beschichtung (4) elektrisch schwach leitend ist.

4. Trägerkörper (1) nach einem der vorhergehenden Ansprüche,
**dadurch gekennzeichnet**, daß die Beschichtung (4) elastisch so deformierbar ist, daß ein, insbesondere durch thermische Ausdehnung, erzeugbarer Zwischenraum zwischen Trägerfläche (2) und elektrischem Leiter (3) durch die Beschichtung (4) ausfüllbar ist.

5. Trägerkörper (1) nach einem der vorhergehenden Ansprüche,
**dadurch gekennzeichnet**, daß die Beschichtung (4) Silikon enthält.

6. Trägerkörper (1) nach Anspruch 5,
**dadurch gekennzeichnet**, daß die Beschichtung (4) ein Silikonkautschuk oder ein Silikonlack ist, insbesondere ein bei Raumtemperatur vernetzender Silikonkautschuk bzw. Silikonlack.

7. Trägerkörper (1) nach einem der vorhergehenden Ansprüche,
**dadurch gekennzeichnet**, daß die Beschichtung (4) zwischen 10 µm und 1 mm dick ist.

8. Trägerkörper (1) nach einem der vorhergehenden Ansprüche,
**gekennzeichnet durch** ein Blechpaket (1) für eine Statorwicklung eines Generators, insbesondere eines Turbogenerators mit einer Leistung größer als 10 MVA.

9. Trägerkörper (1) der in einem Turbogenerator, insbesondere in einem Turbogenerator mit einer Leistung größer als 10 MVA, eingebaut ist, nach einem der vorhergehenden Ansprüche,
**dadurch gekennzeichnet**, daß der Turbogenerator eine Statorwicklung (3C) mit einem Statorstromleiter (3) aufweist, wobei die elektrische Wicklung (3C) die Statorwicklung (3C) und der elektrische Leiter (3) der Statorstromleiter (3) ist.

10. Trägerkörper (1) nach einem der vorhergehenden Ansprüche,
**gekennzeichnet durch** eine Oberfläche (1D), in welcher eine Nut (8) mit einer Nutwand (8A,8B,8C) vorgesehen ist, welche Nutwand (8A, 8B, 8C) die Trägerfläche (2) bildet.

11. Trägerkörper (1) nach Anspruch 10,
**gekennzeichnet durch** einen Deckstreifen (7), der die Nut (8) verschließt und eine zur Nut (8) gerichtete Innenseite (7A) aufweist, welche Innenseite (7A) zumindest teilweise mit der Beschichtung (4) versehen ist.

12. Trägerkörper (1) nach Anspruch 10 oder 11,
**gekennzeichnet durch** einen Zwischenschieber (9) mit einer Zwischenschieberoberfläche (9A, 9B), durch den die Nut (8) in zwei Teile aufgeteilt ist, wobei die Zwischenschieberoberfläche (9a, 9B) zumindest teilweise mit der Beschichtung (4) versehen ist.

13. Verfahren zur Herstellung eines Glimmschutzes für eine elektrische Wicklung (3C), welche einen Trägerkörper (1) mit einer Trägerfläche (2) umfaßt, an welcher Trägerfläche (2) ein elektrischer Leiter (3) angeordnet wird, wobei der Trägerkörper (1) und der elektrische Leiter (3) mit einem Imprägnierstoff, insbesondere einem Kunstharz, zumindest teilweise umgeben werden,
**dadurch gekennzeichnet**, daß die Trägerfläche (2) in einem Beschichtungsbereich (4A) mit einer Beschichtung (4) versehen wird, an der der Imprägnierstoff allenfalls geringfügig haftet.

14. Verfahren nach Anspruch 13,
**dadurch gekennzeichnet**, daß die Beschichtung (4) elektrisch schwach leitend ausgeführt wird.

15. Verfahren nach Anspruch 13 oder 14,
**dadurch gekennzeichnet**, daß als Beschichtung (4) ein Silikonkautschuk oder ein Silikonlack, insbesondere ein bei Raumtemperatur vernetzender Silikonkautschuk bzw. Silikonlack, aufgebracht wird.

## Claims

1. Supporting element (1) which has a supporting face (2) to which an electric conductor (3) of an electric winding (3C) can be attached, which electric winding (3C) can be surrounded by an impregnating substance, characterized in that the supporting face (2) is at least partly provided with a coating (4) for corona shielding.

2. Supporting element (1) according to Claim 1, characterized in that the coating (4) is composed in such a way that an at most slight mutual adhesion of the coating (4) and the impregnating substance can be achieved.

3. Supporting element (1) according to Claim 1, characterized in that the coating (4) is electrically weakly conductive.

4. Supporting element (1) according to one of the preceding claims, characterized in that the coating (4) can be deformed elastically in such a way that an interspace which can be produced between the supporting face (2) and the electric conductor (3), in particular by thermal expansion, can be filled by the coating (4).

5. Supporting element (1) according to one of the preceding claims, characterized in that the coating (4) contains silicone.

6. Supporting element (1) according to Claim 5, characterized in that the coating (4) is a silicone rubber or a silicone varnish, in particular a room-temperature crosslinking silicone rubber or silicone varnish.

7. Supporting element (1) according to one of the preceding claims, characterized in that the coating (4) is between 10 µm and 1 mm thick.

8. Supporting element (1) according to one of the preceding claims, characterized by a core stack (1) for a stator winding of a generator, in particular of a turbogenerator with a power greater than 10 MVA.

9. Supporting element (1) which is installed in a turbogenerator, in particular in a turbogenerator with a power greater than 10 MVA, according to one of the preceding claims, characterized in that the turbogenerator has a stator winding (3C) with a stator current conductor (3), the electric winding (3C) being the stator winding (3C) and the electric conductor (3) being the stator current conductor (3).

10. Supporting element (1) according to one of the preceding claims, characterized by a surface (1D) in which a slot (8) with a slot wall (8A, 8B, 8C) is provided, which slot wall (8A, 8B, 8C) forms the supporting face (2).

11. Supporting element (1) according to Claim 10, characterized by a covering strip (7)., which closes the slot (8) and has an inner side (7A) directed towards the slot (8), which inner side (7A) is at least partly provided with the coating (4).

12. Supporting element (1) according to Claim 10 or 11, characterized by a separator (9) having a separator surface (9A, 9B), by which the slot (8) is divided into two parts, the separator surface (9A, 9B) being at least partly provided with the coating (4).

13. Method of producing a corona shield for an electric winding (3C) which comprises a supporting element (1) with a supporting face (2), on which supporting face (2) an electric conductor (3) is arranged, the supporting element (1) and the electric conductor (3) being at least partly surrounded by an impregnating substance, in particular a synthetic resin, characterized in that the supporting face (2) is provided in a coating area (4A) with a coating (4) to which the impregnating substance adheres at most slightly.

14. Method according to Claim 13, characterized in that the coating (4) is designed to be electrically weakly conductive.

15. Method according to Claim 13 or 14, characterized in that a silicone rubber or a silicone varnish, in particular a room-temperature crosslinking silicone rubber or silicone varnish, is applied as the coating (4).

## Revendications

1. Corps support (1) comportant une surface support (2), à laquelle peut être fixé un conducteur électrique (3) d'un bobinage électrique (3C), lequel bobinage électrique (3C) peut être entouré d'une matière d'imprégnation, caractérisé en ce que la surface support (2) est au moins partiellement pourvue d'un revêtement (4) pour une protection contre les effluves.

2. Corps support (1) selon la revendication 1, caractérisé en ce que le revêtement (4) est tel que l'on peut arriver à une adhérence qui tout au plus est faible entre le revêtement (4) et la matière d'imprégnation.

3. Corps support (1) selon la revendication 1, caractérisé en ce que le revêtement (4) est faiblement conducteur de l'électricité.

4. Corps support (1) selon l'une des revendications précédentes, caractérisé en ce que le revêtement (4) peut subir une déformation élastique au point qu'un espace intermédiaire pouvant être dû en particulier à une dilatation thermique, entre la surface support (2) et le conducteur électrique (3), peut être rempli par le revêtement (4).

5. Corps support (1) selon l'une des revendications précédentes, caractérisé en ce que le revêtement (4) contient une silicone.

6. Corps support (1) selon la revendication 5, caractérisé en ce que le revêtement (4) est un caoutchouc silicone ou un vernis siliconé, en particulier un caoutchouc silicone ou un vernis siliconé réticulable à la température ambiante.

7. Corps support (1) selon l'une des revendications précédentes, caractérisé en ce que le revêtement (4) a une épaisseur comprise entre 10 µm et 1 mm.

8. Corps support (1) selon l'une des revendications précédentes, caractérisé par un paquet de tôles (1) pour un bobinage de stator d'une génératrice, en particulier d'un turbo-alternateur ayant une puissance supérieure à 10 MVA.

9. Corps support (1), qui est incorporé dans un turbo-alternateur, en particulier dans un turbo-alternateur ayant une puissance supérieure à 10 MVA, selon l'une des revendications précédentes, caractérisé en ce que le turbo-alternateur présente un bobinage de stator (3C) comportant un conducteur (3) de courant de stator, le bobinage électrique (3C) étant le bobinage de stator (3C) et le conducteur électrique (3) étant le conducteur (3) de courant de stator.

10. Corps support (1) selon l'une des revendications précédentes, caractérisé par une surface (1D) dans laquelle est prévue une encoche (8) comportant une paroi d'encoche (8A, 8B, 8C), laquelle paroi d'encoche (8A, 8B, 8C) formant la surface support (2).

11. Corps support (1) selon la revendication 10, caractérisé par une bande de couverture (7), qui obture l'encoche (8) et comporte une face intérieure (7A) dirigée vers l'encoche (8), laquelle face intérieure (7A) étant au moins partiellement pourvue du revêtement (4).

12. Corps support (1) selon la revendication 10 ou 11, caractérisé par un coulisseau intermédiaire (9) comportant une surface (9A, 9B) de coulisseau intermédiaire, par lequel l'encoche (8) est subdivisée en deux parties, la surface (9A, 9B) du coulisseau intermédiaire étant au moins partiellement pourvue du revêtement (4).

13. Procédé de fabrication d'une protection contre les effluves pour un bobinage électrique (3C), qui englobe un corps support (1) comportant une surface support (2), un conducteur électrique (3) étant disposé contre la surface support (2), le corps support (1) et le conducteur électrique (3) étant au moins partiellement entourés d'une matière d'imprégnation, en particulier d'une résine synthétique, caractérisé en ce que la surface support (2) reçoit, dans une zone de revêtement (4A), un revêtement (4) auquel la matière d'imprégnation adhère tout au plus faiblement.

14. Procédé selon la revendication 13, caractérisé en ce que le revêtement (4) est réalisé en étant faiblement conducteur de l'électricité.

15. Procédé selon la revendication 13 ou 14, caractérisé en ce qu'on applique en tant que revêtement (4) un caoutchouc silicone ou un vernis de silicone, en particulier un caoutchouc silicone ou un vernis de silicone réticulable à la température ambiante.
